# EUROPEAN PATENT APPLICATION

(11) **EP 1 598 324 A1**
(43) Date of publication of application: **23.11.2005**
(21) Application number: 04011613.9
(22) Date of filing: 15.05.2004
(51) Int. Cl.: C04B 14/30, C04B 35/46, C04B 35/49

(54) **Method for manufacturing shaped titanium oxide**

(71) Applicant: Osada Giken Co., Ltd., Osaka-shi, Osaka 543-0021 (JP)
(72) Inventor: Osada, Hideharu, Nara-shi Nara 631-0007 (JP); Shibamoto, Hironobu, Osaka-shi Osaka 547-0016 (JP); Osada, Shoma, Ikoma-shi Nara 630-0201 (JP)
(74) Representative: Hauck, Graalfs, Wehnert, Döring, Siemons

(57) **Abstract**

Titanium oxide catalyst has been given attention recently as oxidizing catalyst showing the catalytic effect at normal temperatures and has been put into practical use. The conventional ones are finely divided powder in nm unit in relation to catalytic efficiency, so that the powder is quite fine and it is very much hard to handle them. Granulating the finely divided powder for easy handling has been proposed but provides merely poor catalytic efficiency.

The present invention provides shaped or granulated titanium oxide that is ensured of volume to some extent and keeps catalytic efficiency within the range of possibility.

## Description

### BACKGROUND OF THE INVENTION

### Field of the Invention

The present invention relates to a method for manufacturing shaped titanium oxide.

### Prior Art

Titanium oxide has been given attention recently as photo-oxidation catalyst showing the catalytic effect at normal temperatures and has been put into practical use. Typical one is anatase crystalline type. The catalytic effect of the titanium oxide material depends upon surface area. Therefore, in order to increase the catalytic effect it has been studied to make the sizes of titanium oxide material as smaller as possible, having found recently that the size in the order of several dozen nm has appeared.

The appearance of such finely divided powder of the titanium oxide material actually much improved the catalytic effect or efficiency and the material is usable in various oxidation processes.

However, the finely divided powder in nm unit is too fine to be readily handled. In detail, the powder is easily stirred up by a slight gas flow, or flowed by a liquid flow or expelled from a set position together with the liquid flow. Any filter means provided to prevent such problems is likely to clog up.

In order to prevent the foregoing defects it is known to granulate the catalyst particles by dispersing the finely divided powder in water or alcohol to make granulation and drying.

However, the powder merely granulated as such is likely to be covered, over the surface, with a binder or to have high density on the surface, thereby deteriorating the catalytic effect or efficiency. Also, it is only natural that although the larger size of the object can be obtained by granulation, the surface area is made smaller practically.

It is provided here shaped titanium oxide ensuring a size of some extent while keeping within the range of possibility the catalytic effect or efficiency from lowering.

### SUMMARY OF THE INVENTION

Under the above circumstances the Inventor has zealously studied and achieved the method for manufacturing the shaped titanium oxide according to the present invention characterized by: shaping finely divided titanium oxide powder into various shapes by a binder method or a sintering method and crushing the shaped powder to a suitable size; a process to heat a solution dissolving a water-soluble titanium compound and to gradually oxidize titanium, a process to filter produced titanium oxide and a process to heat and dry filtered finely divided titanium oxide powder and continue to heat the powder until the powder is sintered in size of 2mm or more, followed by working the same into a suitable size; and a mixture of shaped titanium oxide manufactured according to the aforesaid method with distribution of particle sizes falling within the following range:
1mm or more in diameter being 0.1~50 wt%,
0.5~1mm being 40~90 wt%
and 0.5mm or less being 1 ~20 wt%.

### DETAILED DESCRIPTION OF THE INVENTION

First, explanation will be given on Claims 1 to 4.

Titanium oxide referred to herein is typically the foregoing anatase type titanium oxide but should not be limited thereto. Titanium oxide shows catalytic activity responsive to application of electromagnetic waves and may be adapted to show the catalytic activity with other energy, not limiting to the application of electromagnetic waves.

The finely divided powder refers to particles of 10 *µ*m or less. Those of sizes more than this do almost not have the foregoing defects as the finely divided powder.

"Shaping" involves coupling some particles by use of a binder into a predetermined shape or sintering to make hard the particles into a predetermined size. Manners for the "shaping" should not be limited to any particular ones. In case of using the binders, an inorganic binder is preferable since it is not decomposed through the catalytic effect. In case of applying the inorganic binder, an organic binder may be partially used as assistant, or an organic substance may be mixed and heated to then gasify the organic substance, thereby shaping the substance into a porous object. Furthermore, an inorganic binder should be used for any matters that made into an inorganic substance after heated or dried.

In the sintering method, depending upon temperatures and time, strength (extent of breaking coagulation of particles) and sizes can be freely adjusted.

Shapes provided by the shaping may be in the form of particles, plates, blocks, rods, or the like.

Next, a preferable shaping method will be referred to.

As foregoing, the catalyst could be covered with the binder used upon shaping operation to thereby lower the catalytic effect. To mitigate such defect within the range of possibility, the binder portion may be replaced with titanium oxide, particularly, a binder made of an organic titanium compound for this purpose, such as titanium tetraalcoxide, titanium acylate, titanium chelate, etc.

Titanium tetraalcoxide, for example, tetra-n-butoxy titanate is most preferable. Tetra-n-butoxy titanate is liquid at normal temperatures and pressures, to which titanium oxide powder is mixed into a suitable size and heated. Heating decomposes tetra-n-butoxy titanate to remove alcohol and leave titanium oxide, so that titanium oxide particles are interlocked. Sizes upon the shaping should not be limited to any particular magnitudes but may be about 0.5 to 50mm. (Note: Specific sizes referred to herein shall be diameters for spheric al objects and almost maximum length for any of irregular shapes.) Sizes upon the shaping may be determined depending upon specific sizes of objects to be worked or practically used or upon working methods and apparatuses.

In shaping operation, the objects may be given other members into the central part of the objects. The product has to or must not float on water depending upon specific usage of the product. Heavy or light substances (metal or the like, or pumice, balloons, etc.) may be placed centrally of the product to enable controlling specific gravity freely and also lowering costs to produce.

Working referred to here is grinding, crushing, shaping or the like, i.e., making smaller or arranging the shapes of the unified bodies provided by the binding method and the sintering method. In detail, merely making smaller by a crusher or changing shapes by use of a file or rasp may be available. Any manners therefor will do and can be taken freely. In making smaller the product, the size 0.1 to 2mm is preferable depending upon usage of the invention. The working may be provided several times in such manner as shaping after crushing, or grinding after crushing.

Shaping referred to here is merely cutting, removing, filing the surface of product to change their shapes but does not mean "molding" by adding other substances. It is for not causing to cover the product's surface having activities. Shaping may be performed by a cutter or a rasp or file, or rolling the product in the casing having a file-like bottom. Shapes after (or provided by) shaping operation may be freely adopted. Spherical product can be readily applied. Otherwise, the product may be ground into a thin plate-like form to be a filter.

The size of product after worked is generally 0.1 to 2mm as foregoing but several dozen *µ*m to 1mm may be enough for a specific usage in which the product is less likely to be stirred up or traveled. Moreover, about 3 to 30mm may be enough in use of the product in water or at a place where a flow speed is quite high. The worked product can be used as it is or alternatively can be classified to match the foregoing sizes.

Next, explanation will be given on Claims 5 to 7.

The substantially same contents as of claims 1 to 4 will not be referred to here.

The method defined in Claim 5 involves a process to heat a solution dissolving a water-soluble titanium compound and to gradually oxidize titanium, a process to filter produced titanium oxide and a process to heat and dry filtered finely divided titanium oxide powder and continue to heat the powder until the powder is sintered in size of 2mm or more, followed by working the same into a suitable size in order to manufacture shaped titanium oxide.

The water-soluble titanium compound is a raw material for titanium oxide and may be titanium tetrachloride, titanium sulfate, or titanyl sulfate, or the like. The compound does hydrolytic dissociation to become titanium oxide containing water of crystallization and be precipitated. Since hydrolytic dissociation is made faster by heating, dissociation reaction is caused generally at a temperature near a boiling point of the solution. The reaction is preferably performed at ref lux.

The solution in this case is ordinarily water or alcohol but may employ any solutions in which titanium compound can be dissolved.

Titanium oxide provided by precipitation is then filtered and separated. The steps referred to above may be the same as of the ordinary manufacturing method and do not have to be a special technique. In the ordinary method, the product is heated to evaporate water and so on, remove water of crystallization and dry so as to complete the product.

The present invention does however continue to heat for hours in this case until the finely divided powder is sintered in size of 2mm or more. Conventional mere drying is about one hour while the present invention performs sufficient sintering at 600°C or more (preferably 800°C or more) generally with time of two hours or more depending upon the amount and desired sizes of the product to be sintered.

Heating may be performed by first storing a predetermined quantity of titanium oxide with batch method and heating the material in a single container. Alternatively, heating may be carried out gradually and continuously to high temperatures with a heating device such as a rotary kiln. It is enough that at least a part (50% or more, for example, but not necessitating the whole) of the material (titanium oxide) is sintered in size of 2mm or more.

The finely divided powder is sintered and shaped in size of 2mm or more. In detail, the sintered powder if not in size of at least 2mm or more cannot be worked at a following process into a suitable size. Shapes resulting from the sintering are free and not especially defined. And any shapes formed without intention will do.

Working method for the material sintered largely as above may be the same as foregoing.

Titanium oxide produced according to the present invention may be usable in any states. In usage for decomposing plastic or the like, it has been found that it is preferable to use the invention in the form of a mixture having a specific distribution of particle sizes in consideration of various physical factors as well as catalytic efficiency.

The preferable distribution is as follows.
1mm or more in diameter is 0. 1~50 wt%,
0.5~1mm being 40~90 wt%
and 0.5mm or less being 1~20 wt%.

Distribution of particle sizes of the present invention basically employs generally three kinds of magnitudes of particles, larger ones being 1mm or more in diameter, middle ones 0.5 to 1mm and smaller ones 0.5mm or less. The sizes are expressed with diameter of spherical objects as a typical example. A maximum length is expressed for particles having irregular shapes.

First, those 1mm or more in diameter is 0.1 to 50wt% as aforesaid, and 7 to 12wt% is most preferable. It is because the larger particles of 1mm or more in diameter are agitated to physically decompose objects to be decomposed or to increase agitation efficiency. But the larger particles when contained excessively have smaller surface area to lower the catalytic efficiency.

Particles of 0.5 to 1mm in diameter are 40 to 90wt% and a main body as the catalyst. The fact that those of this size exist most can keep catalytic efficiency. Existence of that quantity of this range makes very much high the effect of uniform dispersion of objects to be decomposed and decomposed chemical intermediates or the like. In case that those of this size exists too less, the particles are so coarse to lower the catalytic effect, or the particles are too fine so as to be stirred up or be inconvenient in handling.

Further, particles of 0.5mm or less in diameter is 1 to 20wt% since smaller particles are also required; they can effectively contact with objects to be decomposed when become smaller in size; and the surface area can be ensured sufficiently. In this case also, 7 to 12 wt% is most preferable.

The aforesaid distribution of particle sizes can be further more strictly subdivided or classified, for example, as follows.

| | |
|---|---|
| Particles of 1.4mm or more | 0.1 to 2.0wt% |
| 1.0 to 1.4mm | 5 to 15wt% |
| 0.7 to 1.0mm | 20 to 40wt% |
| 0.5 to 0.7mm | 30 to 50wt% |
| 0.5mm or less | 1 to 15wt% |

It has been found and confirmed in our experiments that particles of various sizes (that can be provided by the subdividing) can be usable or applicable effectively.

Titanium oxide according to the present invention is applicable to any places where the catalytic effect is to be shown. In recent times, it has been found that titanium oxide is excited by not only light but also heat to show catalytic effect. The present invention is also applicable to a place where there is only heat without light (i.e., electromagnetic waves such as ultraviolet, etc).

The present invention can be applied, for example, to washing of contaminated water, deodorizing, decomposing of plastic, decomposing of harmful organic substances, or toxic gas, or the like. The shaped titanium oxide according to the present invention can be used with the shaped titanium oxide being filled in a container, being placed in a bag such as a net, or being sandwiched between nets or the like.

Furthermore, the shaped titanium oxide as provided above can be applied with only the product in a specific size being used. Alternatively, the invention can be used in the form of a mixture of the product in various sizes having a predetermined distribution of particle sizes so as to enjoy high catalytic effect.

### Effect of the Invention

The present invention has the high advantages as follows.
(1) The invention that is provided by sintering finely divided powder of titanium oxide shows relatively high catalytic efficiency while having high strength, i.e., being not likely to be broken into finely divided powder.
(2) The invention has volume to some extent so as to be very much readily handled in comparison with finely divided powder. There causes almost no problems of scattering and various clogging up of finely divided powder.
(3) Use of the distribution of particle sizes according to the present invention excellently improves efficiency of decomposition of plastic or the like.

### BRIEF DESCRIPTION OF THE DRAWINGS

Fig. 1 is a sectional view showing an experiment for checking the effect of the shaped titanium oxide according to the present invention.
Fig. 2 is a sectional view of a simple device for checking efficiency of decomposition of catalyst.

### PREFERRED EMBODIMENTS OF THE INVENTION

Next, the present invention will be further detailed with referring to preferable examples.

### Example I

Finely divided powder of commercially available anatase type titanium oxide was granulated into granules of about 2 to 5mm in diameter by using tetra-n-butoxy titanium as a binder, and the granules were crushed into 0.5 to 1.0mm diameter by use of a crusher. The crushed material was rolled on a file to be shaped into a spherical shape with the size substantially not changed.

### Example 2

Finely divided powder of titanium oxide the same one as of Example 1 was sintered at 800°C or more to form a sintered object in size of about 2 to 5mm. And the sintered material was crushed into size of 0.5 to 1mm and rolled on a file to be shaped into a spherical shape with the size substantially not changed.

### Example 3

Titanium oxide manufactured according to the method defined in Claim 5 with the size of 0.5 to 1.0mm was used.

### Comparative example 1

Finely divided powder of anatase type titanium oxide (commercially available, several nm to several dozen nm in size) was used as the comparative example 1.

### Comparative example 2

Finely divided powder of the comparative example 1 was granulated in size of 0.5 to 1.0mm by a binder.

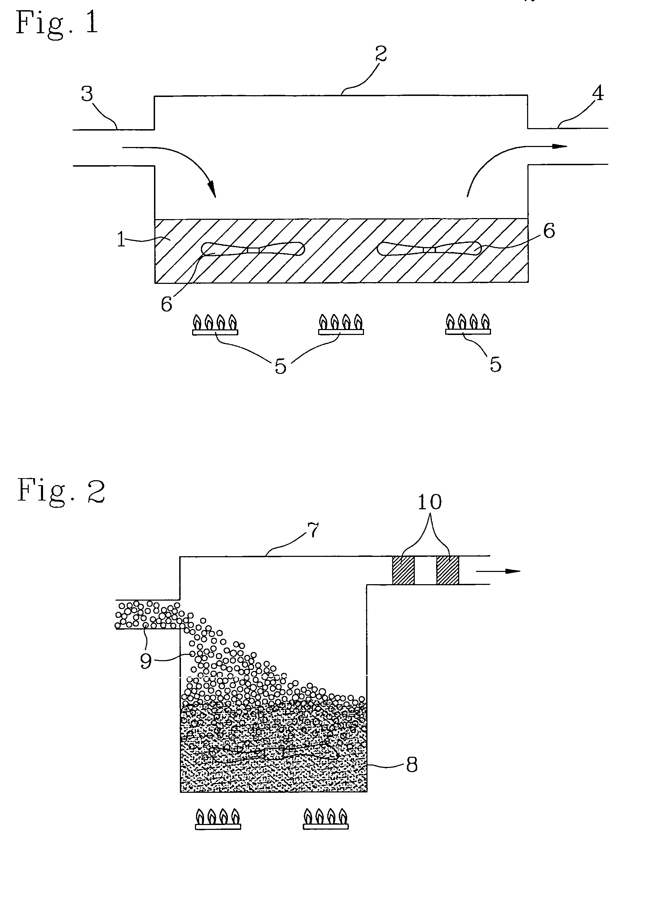

Next, explanation will be given with referring to the experiment device shown in Fig. 1.

Particles 1 of Example 1 were filled one third of the depth in a transparent container 2 of about 1000cc in volume. The container 2 is provided with a gas introduction port 3, and an exhaust port 4. The container 2 was heated at 350°C from the outside by a heating device 5. An agitating device is provided for agitating the particles 1 of titanium oxide.

An exhaust gas having malodor of a poultry farm was introduced through the gas introduction port 3. Air for oxidizing if insufficient may be separately introduced. Speed of air flow is set to be lower for ensuring residence time in the container 2. Organic substances are decomposed and discharged through the exhaust port 4. In this example, electromagnetic waves such as ultraviolet or the like is not applied. A device for ultraviolet irradiation may be provided on the ceiling or the like.

The comparative examples 1 and 2 were also subjected to the experiment device in the same manner.

Experiment results are as follows.
1. Malodor of exhaust gas
Example 1: none
Example 2: none
Example 3: none
Comparative example 1: none
Comparative example 2: left in trace amounts
2. Reduction in weight of titanium oxide
Example 1: substantially 0%
Example 2: substantially 0%
Example 3: substantially 0%
Comparative example 1: about 20%
Comparative example 2: about 10%

From the above experiment results, it was found that the finely divided powder of the comparative example 1 is flowed with air through the exhaust port to be reduced largely in quantity, and merely granulated particles of the comparative example 2 shows only poor catalytic efficiency by any means. The comparative example 2 returns to finely divided particles by the agitating device to scatter. The Examples according to the present invention did not show these matters and are excellent in this regard.

### Example 4

A mixture having the following distribution of particle sizes using titanium oxide manufactured with the method according to Claim 5 of the present invention was used as Example 4.

| | |
|---|---|
| Particles in size of 1.0mm or more | 0.2wt% |
| 0.5 to 1.0mm | 81.2wt% |
| 0.5mm or less | 18.6wt% |

### Example 5

The same catalyst as of Example 4 was used. Distribution of particle sizes was as follows.

| | |
|---|---|
| Particles in size of 1.4mm or more | 0.98wt% |
| 1.0 to 1.4mm | 10.0wt% |
| 0.7 to 1.0mm | 34.3wt% |
| 0.5 to 0.7mm | 41.9wt% |
| 0.3 to 0.5mm | 9.87wt% |
| 0.3mm or less | 2.95wt% |

### Comparative example 3

The same catalyst as of Example 2 unified in size of 0.1 to 0.3mm was used as the comparative example 3.

The device shown in Fig. 2 was used. Titanium oxide 8 was placed in the reactor 7 and small pieces of plastic 9 (crushed polyethylene in size of about 5mm) in the same weight were also introduced, followed by heating and agitating. The weight of polyethylene was 1kg. The reactor 7 is provided with a layer of oxidizing catalyst 10 near the outlet. The oxidizing catalyst layer 10 is provided for oxidizing incomplete oxide such as carbon monoxide or the like occurring when plastic is decomposed. Catalyst may employ platinum, palladium or the like ordinarily applied. Shapes of the catalyst layer may be in the form of honeycomb or the like. A heating device may be separately provided to the catalyst layer for a case of low temperatures.

Time when plastic was agitated to be decomposed and gasified was timed.

In the comparative example 3, it took about 30min for plastic pieces to disappear. And much catalyst was stirred up to scatter in air. In Example 4 of the present invention, it took 15min for plastic pieces to almost disappear and catalyst was less stirred up. In Example 5, it took 13min for plastic pieces to almost disappear. Furthermore, powder smaller than the comparative example was solely subjected to the experiment and too much stirred up to be continued.

From this, it has been found that the same titanium oxide has difference in decomposing plastic depending upon difference in the distribution of particle sizes of titanium oxide. It is inferred to be based on such fact that larger objects exist to some extent upon agitation to have an effect of physical colliding. And in case that smaller objects are little to have smaller surface area, the catalytic efficiency lowers. An effective range synthesized from these facts is just the range defined in Claim 7.

## Claims

1. A method for manufacturing shaped titanium oxide by shaping finely divided titanium oxide powder into various shapes by a binder method or a sintering method and working the shaped titanium oxide to a suitable size.

2. A method for manufacturing shaped titanium oxide as set forth in Claim 1 wherein titanium oxide after worked is classified to be roughly uniformed in a desired size.

3. A method for manufacturing shaped titanium oxide as set forth in Claim 1 or 2 wherein titanium oxide is anatase type titanium oxide and the binder is titanium alcoxide.

4. A method for manufacturing shaped titanium oxide as set forth in Claim 1 to 3 wherein shaping of titanium oxide into various shapes by use of the binder is performed with other member being placed at the central part of shaped object.

5. A method for manufacturing shaped titanium oxide including a process to heat a solution dissolving a water-soluble titanium compound and to gradually oxidize titanium, a process to filter produced titanium oxide and a process to heat and dry filtered finely divided tit anium oxide powder and continue to heat the powder until the powder is sintered in size of 2mm or more, followed by working the same into a suitable size.

6. A method for manufacturing shaped titanium oxide as set forth in Claim 5 wherein the water-soluble titanium compound is titanyl sulfate or titanium chloride.

7. A mixture of shaped titanium oxide manufactured according to the method as set forth in Claim 1 or 5 with distribution of particle sizes falling within the following range: 1mm or more in diameter being 0.1~ 50 wt%, 0.5~1mm being 40~90wt% and 0.5mm or less being 1~20wt%.
